# DEMANDE DE BREVET EUROPEEN

(11) **EP 0 908 867 A1**
(43) Date de publication de la demande: **14.04.1999**
(21) Numéro de dépôt: 98402412.5
(22) Date de dépôt: 01.10.1998
(51) Int. Cl.: G10K 11/16, B60J 1/00, B60J 10/00

(54) **Vitrage mobile de protection acoustique améliorée en contact avec un joint périphérique**

(30) Priorité: 06.10.1997 FR 9712408
(71) Demandeur: SAINT-GOBAIN VITRAGE, 92400 Courbevoie (FR); DRAFTEX INDUSTRIES LIMITED, Edinburgh EH2 3AP, Scotland (GB)
(72) Inventeur: Cohen, Olivier, 44100 Nantes (FR); Rehfeld, Marc, 95460 Ezanville (FR); Garnier, Gilles, 60150 Thourotte (FR)
(74) Mandataire: Muller, René

(57) **Abrégé**

L'invention concerne un vitrage mobile (2) de protection acoustique améliorée pour véhicule et notamment pour véhicule automobile, en contact avec un joint périphérique (3).

Selon l'invention, ledit vitrage est dépourvu au moins du ou des modes de rayonnement qui sont couplés avec un ou plusieurs modes de cavité de l'habitacle du véhicule lorsque ledit vitrage est excité par un champ acoustique, par le moyen d'une modification locale de la liaison vitrage/habitacle au niveau du joint périférique.

## Description

L'invention concerne un vitrage coulissant de protection acoustique améliorée pour véhicule et notamment pour véhicule automobile, en contact avec un joint périphérique.

Parmi toutes les qualités concourant au confort dans les moyens de transport modernes comme les trains et les automobiles, le silence devient déterminant. En effet, les autres sources de désagrément d'origine mécanique, thermique, de visibilité, etc... ont été à peu près maîtrisées. Mais l'amélioration du confort acoustique présente de nouvelles difficultés. Les bruits d'origine aérodynamique, c'est-à-dire créés par le frottement de l'air sur le véhicule en déplacement, ont pu, au moins en partie, être traités à leur source. C'est-à-dire que pour économiser l'énergie, les formes ont été modifiées, on a amélioré la pénétration dans l'air et diminué les turbulences qui sont elles-mêmes source de bruits. Parmi les parois d'un véhicule qui séparent la source de bruit aérodynamique extérieure de l'espace intérieur où se trouve le passager, les vitrages sont évidemment les plus difficiles à traiter. On ne peut utiliser des absorbants pâteux ou fibreux réservés aux parois opaques et pour des raisons de poids, les épaisseurs ne peuvent être augmentées inconsidérablement. Le brevet européen EP-B1-0 387 148 propose des vitrages qui réalisent une bonne isolation contre les bruits d'origine aérodynamique sans que leur poids et/ou leurs épaisseurs soient trop augmentés. Le brevet propose ainsi un vitrage feuilleté dont l'intercalaire possède de bonnes propriétés d'amortissement.

Cependant les bruits eux-mêmes comme les bruits de moteur, bruits de roulement ou de suspension doivent par la même occasion être traités. Ces bruits ont déjà été traités à leur origine ou, en partie, au cours de leur propagation, soit aérienne (revêtement absorbant en particulier) ou dans les solides (pièces de liaison en élastomère par exemple).

Par contre, le traitement des vitrages contre les bruits qui ont leur origine dans le véhicule lui-même, c'est-à-dire les bruits transmis soit par voie aérienne, soit par l'intermédiaire des solides, est plus difficile à réaliser et n'est pas encore complètement maîtrisé à l'heure actuelle. Les vitrages constituent une surface importante de l'habitacle du véhicule et donc en conséquence, une surface de rayonnement importante. Il s'avère que l'emploi de pièces de liaison adaptées reste insuffisant pour éviter la propagation du bruit par vibration des vitrages et qu'en particulier à certaines vitesses de rotation du moteur, un bourdonnement perceptible par le passager apparaît et cause ainsi une source de désagrément. En effet, la rotation du moteur entraîne une création de vibrations qui se transmettent aux vitrages soit par voie aérienne, soit par voie solidienne.

Les principaux paramètres influençant le comportement vibro-acoustique des vitrages dans ce domaine résident dans la forme du vitrage, dans la structure du vitrage, dans l'interface vitrage/habitacle, dans la source excitatrice, dans le mode de propagation. Ainsi pour un véhicule donné, les paramètres d'action pour améliorer le comportement des panneaux rayonnants que constituent les vitrages résident dans la structure du vitrage ainsi que dans l'interface vitrage/habitacle.

De nombreux efforts ont été réalisés dans la structure du vitrage afin d'améliorer l'effet d'affaiblissement sonore à l'intérieur de l'habitacle. On peut citer de manière générale, la réalisation de vitrages feuilletés dont l'intercalaire possède des propriétés originales conférant aux vitrages une bonne protection contre les bruits aérodynamiques et/ou les bruits d'origine aérienne et/ou les bruits d'origine solidienne ainsi que la réalisation de vitrages multiples. Par contre, l'utilisation de tels vitrages sur l'ensemble d'un véhicule augmente considérablement le coût du véhicule.

L'invention se donne pour tâche de fournir un vitrage coulissant en contact avec un joint périphérique pour véhicule et notamment pour véhicule automobile qui présente une bonne protection acoustique vis-à-vis des bruits, en particulier des bruits d'origine aérienne et d'origine solidienne et cela sans pour autant augmenter considérablement le coût du véhicule.

Ce but est atteint selon l'invention par un vitrage coulissant en contact avec un joint périphérique pour véhicule et notamment pour véhicule automobile, ledit vitrage étant dépourvu au moins du ou des modes de rayonnement qui sont couplés avec un ou plusieurs modes de cavité de l'habitacle du véhicule lorsque ledit vitrage est excité par un champ acoustique. On entend par champ acoustique l'ensemble des vibrations créées par la propagation aérienne et solidienne des bruits. La structure du vitrage n'est pas limitée aux vitrages monolithiques, tous types de vitrages feuilletés et de vitrages multiples entrent aussi dans le cadre de l'invention, de même la forme du vitrage n'est pas un paramètre limitatif de l'invention, toutes formes possibles pour un vitrage coulissant destiné à un véhicule entrent dans le cadre de l'invention.

Le vitrage coulissant selon l'invention permet grâce à l'élimination des modes de rayonnement qui sont couplés avec des modes de cavité de l'habitacle du véhicule de diminuer l'effet de bourdonnement perceptible par le passager à certaines vitesses de rotation du moteur. En effet, à certaines fréquences de vibrations du moteur, c'est-à-dire à certaines vitesses de rotation du moteur, les vitrages et l'habitacle du véhicule ont chacun des modes de rayonnement et de cavité dont le couplage amplifie le bourdonnement issu du rayonnement des bruits provenant en l'occurence du moteur par les vitrages. Ainsi, en éliminant ces modes de rayonnement, on élimine l'effet amplifié de bourdonnement et on augmente le confort acoustique du passager.

Une analyse modale de l'habitacle du véhicule permet de déterminer la fréquence où apparait l'effet de bourdonnement causé par le couplage d'un mode de rayonnement d'un vitrage du véhicule avec un mode de cavité de l'habitacle.

Pour cela, on effectue une montée en régime moteur du véhicule et on relève la courbe des modes de cavité du volume de l'habitacle. La fréquence dite "génante" apparait alors par la formation d'un pic important avec une précision de l'ordre de ± 5 %. Grâce au vitrage coulissant selon l'invention, il est alors possible d'éliminer ce mode de rayonnement dit "gênant".

Selon une variante de l'invention, le vitrage coulissant est dépourvu au moins du premier mode impair de rayonnement . Par mode impair, on définit le nombre impair de zones de rayonnement et vice-versa, par mode pair, on définit le nombre pair de zones de rayonnement. Ainsi par premier mode impair, on définit une unique zone de rayonnement. De cette manière, lorsque ledit vitrage selon l'invention est excité par un champ acoustique, il possède au moins deux zones de rayonnement.

Le vitrage coulissant selon l'invention permet grâce à l'élimination du premier mode impair de rayonnement de diminuer le rayonnement dudit vitrage. En effet, le premier mode impair est le mode le plus rayonnant du fait de son unique zone de rayonnement. Ainsi en éliminant ce mode de rayonnement, on diminue le rayonnement global du vitrage par la présence d'au moins deux zones de rayonnement.

Selon une variante préférée de l'invention, le vitrage coulissant est dépourvu de la totalité des modes impair de rayonnement lorsque celui-ci est excité par un champ acoustique. De cette manière, lorsque ledit vitrage est excité par un champ acoustique, il possède un nombre pair de zones de rayonnement, c'est à dire des zones de rayonnement en opposition de phase.

Le vitrage coulissant selon l'invention permet grâce aux zones de rayonnement en opposition de phase de diminuer le rayonnement global dudit vitrage. En effet, le déphasage des zones permet d'obtenir un effet de compensation de ces zones les unes sur les autres. De façon imagée, lorsqu'une zone tire dans un sens, l'autre zone va pousser en sens inverse, ainsi l'effet vibratoire de la somme de ces zones tend vers un effet nul et le rayonnement actif est fortement diminuée. En diminuant le rayonnement, on diminue la transmission des bruits et on améliore en conséquence le confort acoustique à l'intérieur de l'habitacle.

Selon une réalisation préférée du vitrage selon l'invention, le déplacement dudit vitrage coulissant dans le joint périphérique est localement diminué. Les inventeurs ont su mettre en évidence qu'en modifiant localement la liaison vitrage coulissant/habitacle au niveau du joint périphérique, on réalise une modification du rayonnement du vitrage et en particulier, on peut réaliser une diminution du rayonnement. Ainsi la diminution du déplacement du vitrage dans le joint périphérique uniquement sur une partie limitée de la périphérie du vitrage permet de réaliser un vitrage dépourvu au moins du premier mode impair de rayonnement lorsque celui-ci est excité par un champ acoustique.

Pour chaque type de vitrage bien défini, il est nécessaire de déterminer la ou les zones du vitrage dont le déplacement dans le joint périphérique va être diminué. Pour cela, on effectue une série de mesures selon lesquelles on déplace une ou plusieurs cales le long de la périphérie du vitrage en les plaçant entre le joint périphérique et le bord du vitrage, le déplacement étant réglé selon un pas de 5 cm et on relève pour chaque position des cales les modes de rayonnement du vitrage à partir d'une analyse modale. Ainsi, les courbes obtenues permettent de déterminer pour quelles positions des cales, ledit vitrage est dépourvu des modes de rayonnement dits "gênants" lorsque celui-ci est excité par un champ acoustique.

Selon une variante de l'invention, le vitrage coulissant possède au moins un point de voilage au niveau de son contact avec le joint périphérique. On entend par point de voilage, une déformation ponctuelle du vitrage. Cette déformation ponctuelle permet d'augmenter localement le maintien du vitrage coulissant dans le joint périphérique en écrasant celui-ci, donc en conséquence en diminuant localement sa possibilité de déplacement.

Selon une autre variante de l'invention, le vitrage coulissant présente au moins une surépaisseur au niveau de son contact avec le joint périphérique. Cette surépaisseur du vitrage peut être réalisée par tous moyens connus de l'homme du métier, tels que, par exemple à l'aide d'une pastille que l'on vient coller sur le bord du vitrage, ou à l'aide d'un morceau de profilé que l'on positionne sur le bord du vitrage, par exemple, par encapsulation ou par extrusion, ou encore à l'aide d'un encadrement périphérique du vitrage dont l'épaisseur varie sur sa longueur. Tout autre moyen ayant pour but de réaliser une surépaisseur du vitrage au niveau de son contact avec le joint périphérique entre dans le cadre de l'invention.La fonction de cette surépaisseur locale est identique à celle du point de voilage.

Selon une tout autre variante de l'invention, le joint périphérique possède au moins un clip ou crochet venant au contact du vitrage coulissant. Par clip ou crochet, on entend tout élément pouvant être intégré dans un joint et exerçant une force de compression sur le vitrage supérieure à celle du joint. Ainsi, grâce à ces éléments, on augmente localement le maintien du vitrage coulissant dans le joint périphérique. L'intégration de tels éléments dans le joint périphérique peut être réalisée par tous moyens connus de l'homme du métier.

Selon une autre variante de l'invention, le joint périphérique est contraint sur au moins une partie de sa longueur. On entend par contraindre, le fait de modifier le joint sur au moins une partie de sa longueur de sorte que son contact avec le vitrage soit modifié, ainsi le déplacement du vitrage dans le joint n'est pas identique sur toute la longueur du joint. De préférence, on entend par contraindre le fait d'augmenter localement les forces de pression exercées par le joint périphérique sur le bord du vitrage et ainsi d'augmenter localement le maintien du vitrage dans le joint.

Selon une variante préférée de l'invention, le vitrage coulissante est en contact avec un joint coulisse et un joint lécheur tel que, par exemple, une vitre latérale mobile de véhicule. Le joint coulisse est un joint profilé dans lequel glissent les bords d'un vitrage mobile lors de son ouverture et de sa fermeture et le joint lécheur est un joint profilé destiné à rester en contact avec une face d'un vitrage mobile. Les joints coulisses et les joints lécheurs, tout en remplissant leur rôle particulier, ont des fonctions analogues en assurant le guidage, l'étanchéité et l'amortissement des vibrations et des bruits du vitrage.

Selon une réalisation préférée de l'invention, la liaison entre le vitrage coulissant et le joint coulisse présente une raideur différenciée, c'est à dire que le déplacement du vitrage dans le joint coulisse n'est pas identique sur toute la longueur de ce joint, ainsi on obtient une diminution locale du déplacement du vitrage. Les inventeurs ont su mettre en évidence qu'une modification locale de la raideur de la liaison entre le vitrage coulissant et le joint coulisse permet d'obtenir un vitrage dépourvu au moins du premier mode impair de rayonnement lorsque celui-ci est excité par un champ acoustique. La liaison entre le vitrage coulissant et le joint lécheur ne nécessite alors aucune modification au niveau de sa raideur. Cette liaison à raideur différenciée peut être obtenue de diverses manières et plus particulièrement selon celles énoncées précédemment.

L'invention concerne également un joint périphérique destiné à recevoir un vitrage mobile de protection acoustique amélioré pour véhicule et notamment pour véhicule automobile. Selon l'invention, ce joint périphérique est tel qu'il diminue localement le déplacement du vitrage mobile en contact avec lui. Une diminution locale du déplacement du vitrage dans le joint permet de diminuer le rayonnement dudit vitrage grâce à la suppression au moins du premier mode impair de rayonnement.

Selon une variante de l'invention, le joint présente une raideur différenciée. De cette manière, le déplacement du vitrage mobile dans le joint est limité sur certaines parties et le rayonnement du vitrage est modifié.

Selon une autre variante de l'invention, un clip ou crochet est fixé sur le joint périphérique et est en contact avec le vitrage mobile lorsque celui-ci est placé dans le joint. Le clip ou crochet exerce alors une pression sur le vitrage et diminue ainsi de manière ponctuelle le déplacement dudit vitrage.

Le vitrage coulissant selon l'invention présente une bonne protection acoustique vis-à-vis des bruits et en particulier des bruits d'origine aérienne et d'origine solidienne. Le vitrage coulissant selon l'invention ainsi que le joint périphérique selon l'invention permettent d'améliorer sensiblement l'effet d'affaiblissement sonore du vitrage et donc le confort dans le véhicule, ce qui, c'est bien connu, augmente la capacité de concentration du conducteur et diminue sa fatigue. Ainsi ce vitrage mobile et ce joint périphérique agissent favorablement sur la sécurité en général.

La description et les figures permettent de comprendre le fonctionnement de l'invention et d'en saisir tous les avantages.

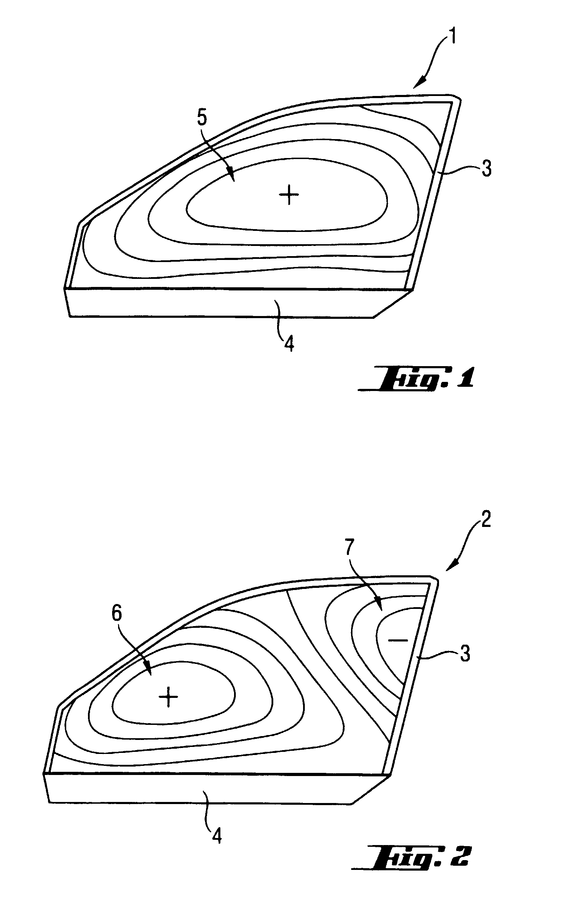

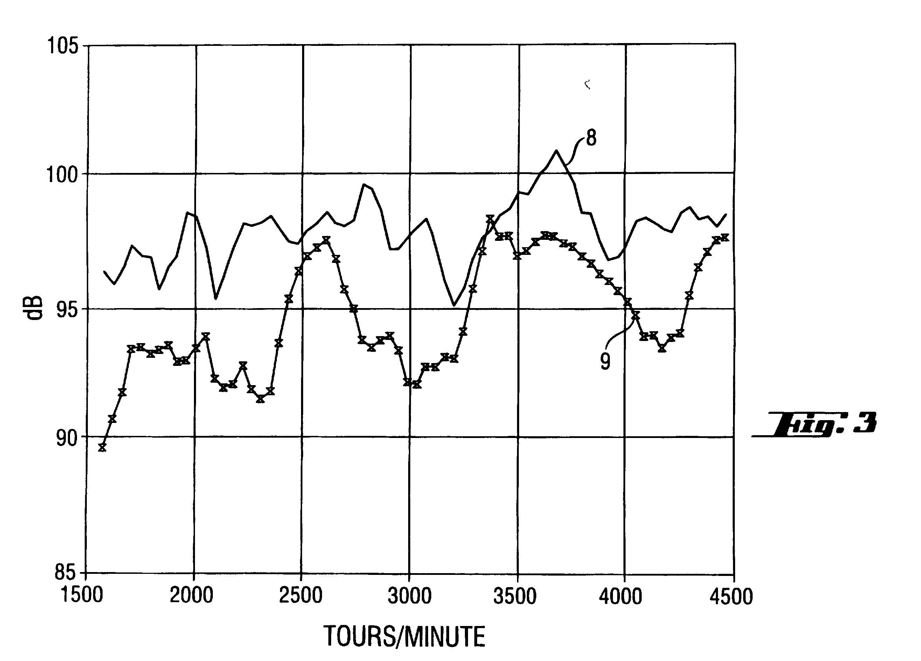

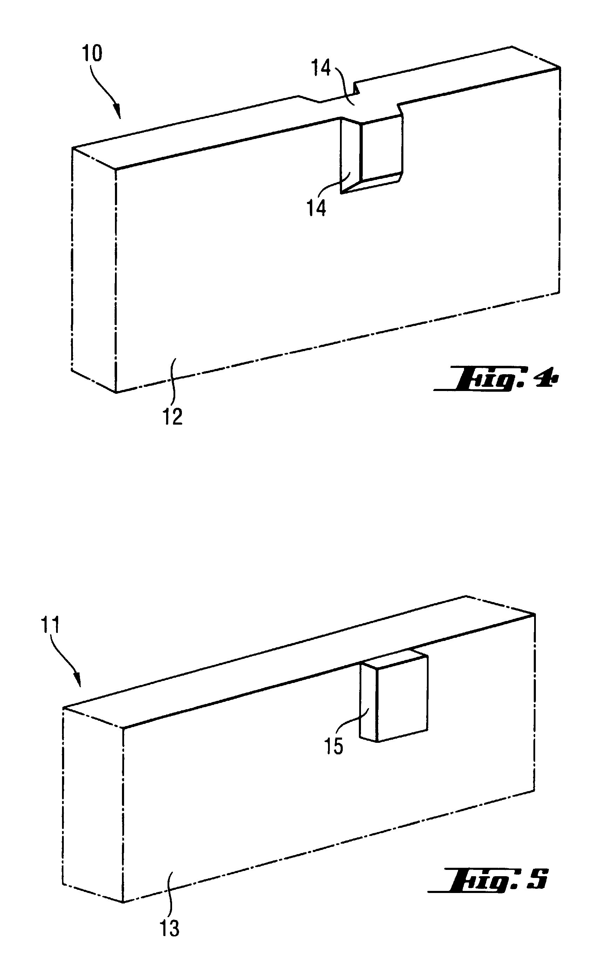

Parmi les figures :
. La figure 1 : représente le rayonnement d'une vitre latérale coulissante classique de voiture ;
. La figure 2 : représente le rayonnement d'une vitre latérale coulissante selon l'invention ;
. La figure 3 : représente le niveau de bruit à l'intérieur de l'habitacle d'un véhicule automobile pour une vitre latérale coulissante classique et pour une vitre latérale coulissante selon l'invention.
. La figure 4 : représente le bord d'un vitrage d'une vitre coulissante selon l'invention.
. La figure 5 : représente le bord d'un vitrage d'une autre vitre coulissante selon l'invention.
. Les figures 6, 7, 8 et 9 : représentent différents types de joint coulisse selon l'invention, en contact avec une vitre latérale coulissante.

Les figures 1 et 2 représentent respectivement une vitre latérale coulissante 1 et 2 de voiture constituées toutes deux, par exemple, d'un vitrage monolithique trempé d'épaisseur 3 mm à base de verre silico-sodo-calcique, en contact avec un joint coulisse 3 et un joint lécheur 4, cette vitre étant excité par un champ acoustique. Les deux figures permettent de comprendre l'amélioration acoustique apportée par l'invention.

Sur la figure 1, la vitre latérale coulissante 1 en contact avec le joint coulisse 3 et le joint lécheur 4 montre le rayonnement d'une vitre coulissante classique. On entend par vitre classique, une vitre que l'on trouve de manière générale sur les véhicules actuels et qui n'est pas conforme à l'invention. La vitre latérale coulissante 1 excitée par un champ acoustique présente une seule zone de rayonnement 5. Cette zone 5 est représentée par plusieurs courbes fermées qui s'emboîtent les unes dans les autres. Cette représentation est équivalente à celle de courbes de niveaux, les différents niveaux correspondants ici aux déplacements dus aux vibrations du vitrage. Le signe " + " représente la phase positive du rayonnement et le signe "-" dans la figure suivante représente la phase négative. De cette manière, on représente avec les signes " + " et "-" les zones en opposition de phase.

La figure 1 montre, grâce à la zone de rayonnement 5, que toute la surface du vitrage rayonne en phase, en effet toute la surface se déplace de la même manière. Ainsi le rayonnement actif du vitrage englobe la totalité de la surface du vitrage.

Sur la figure 2, la vitre latérale coulissante 2 en contact avec le joint coulisse 3 et le joint lécheur 4 montre le rayonnement d'une vitre coulissante selon l'invention. On observe ici deux zones de rayonnement 6 et 7 en opposition de phase remplaçant la zone de rayonnement 5. Les courbes représentant le déplacement, on comprend donc que lorsque la zone 6 se déplace dans un sens, la zone 7 se déplace dans le sens inverse. Ainsi un effet de compensation apparaît et le rayonnement actif est fortement diminué par rapport à celui de la figure 1. Grâce à cette diminution du rayonnement actif, on diminue la transmission des bruits, et donc on améliore l'effet d'affaiblissement sonore à l'intérieur de l'habitacle du véhicule.

Les représentations des figures 1 et 2 ne sont données qu'à titre explicatif et ne représentent donc aucune valeur de mesures particulières. En effet, les présentations de mesures n'aurait aucun intérêt pour la description car de telles mesures sont particulières à chaque type de véhicule et à chaque vitrage coulissant de ces véhicules.

La figure 3 représente le niveau de bruit à l'intérieur de l'habitacle d'un véhicule automobile pour une vitre latérale coulissante classique (courbe 8) et pour une vitre latérale coulissante selon l'invention (courbe 9). Ces mesures ont été effectuées sur la base de la latérale avant du véhicule WOLKSWAGEN ® commercialisé sous la dénomination POLO ®, modèle trois portes.

Cette latérale est constituée d'un vitrage monolithique en verre trempé à base de verre silico-sodo-calcique et a une épaisseur de 3,85 mm. Ce vitrage est en contact avec un joint coulisse et un joint lécheur.

Ces mesures du niveau de bruit à l'intérieur de l'habitacle ont été effectuées à l'aide de deux micros placés dans une tête artificielle, ces deux micros permettant de simuler l'appareil auditif humain, (système HEAD acoustics) afin d'enregistrer les bruits et d'un tachymètre afin d'enregistrer l'information sur le régime moteur. La tête artificielle pourvue des deux micros est positionnée à l'intérieur du véhicule au niveau du siège passager et est reliée au tachymètre. Afin d'étudier l'influence des conditions aux limites de la latérale, on effectue les mesures du niveau de bruit généré à l'intérieur du véhicule pour des montées en régime allant de 1000 à 4500 tours/minute en troisième vitesse. Les informations sur les bruits et sur le régime moteur sont enregistrées simultanément, numérisées et traitées. De cette manière, on obtient les courbes 8 et 9 de la figure 3 qui représentent le bruit à l'intérieur de l'habitacle du véhicule en fonction du régime moteur (tours/minute), bruit enregistré par le micro positionné du côté de la latéral avant droite du véhicule.

La vitre latérale coulissante classique donnant la courbe 8 est la vitre latérale coulissante qui se trouve sur le véhicule WOLKSWAGEN ® commercialisé sous la dénomination POLO ® modèle trois portes et la vitre latérale coulissante selon l'invention donnant la courbe 9 est la vitre latérale coulissante classique donnant la courbe 8 mais dont le déplacement dans le joint coulisse est localement diminué à l'aide d'une cale créant ainsi une surépaisseur du vitrage au niveau de son contact avec le joint coulisse.

Il ressort de manière incontestable de ces mesures que la latérale coulissante selon l'invention améliore sensiblement l'effet d'affaiblissement sonore à l'intérieur du véhicule, le niveau de bruit étant de manière générale inférieur à celui de la latérale coulissante classique.

Les figures 4 et 5 représentent le bord (10 ; 11) d'un vitrage monolithique (12 ; 13) d'une vitre latérale coulissante 2 selon l'invention, ledit bord (10 ; 11) venant en contact avec un joint coulisse ici non représenté.

Selon la représentation de la figure 4, le bord 10 du vitrage 12 présente un point de voilage 14, c'est-à-dire une déformation locale du galbe du vitrage. Un tel point de voilage 14 peut être obtenu, par exemple, à l'aide d'une forme de pressage lors du formage du vitrage, ou encore à l'aide d'un soufflage différentiel sur cette zone lors du formage ou de la trempe dudit vitrage. Le point de voilage 14 présente, de préférence, une épaisseur de l'ordre du millimètre. De cette manière, lorsque le vitrage 12 est en contact avec le joint coulisse, le maintien du vitrage 12 dans le joint coulisse est localement augmenté grâce au point de voilage 14 qui diminue localement le déplacement du vitrage 12 dans le joint coulisse.

Selon la représentation de la figure 5, le bord 11 du vitrage 13 présente une surépaisseur locale 15. Une telle surépaisseur 15 peut être obtenue, par exemple, en collant une pastille de plastique, ou en encore en sérigraphiant une pastille d'émail sur ledit vitrage. Ces pastilles 15 présentent, de préférence, les dimensions 5 mm x 10 mm x 1 mm. De cette manière, comme pour le point de voilage 14, le déplacement du voilage 13 dans le joint coulisse est localement diminué.

Les figures 6, 7, 8 et 9 représentent différents types de joint coulisse dont la raideur est ponctuellement modifiée afin de diminuer localement le déplacement des vitres latérales coulissantes 16 en contact avec ces joints coulisses. Ces différents types de joint coulisse sont tous réalisés à partir d'une même coulisse standard 17 que l'on trouve habituellement sur les véhicules actuels. Cette coulisse standard 17 présente une forme en U, les bords libre du U se terminant chacun par une lèvre 18 orientée vers l'intérieur du U. Ainsi, la vitre coulissante 16 peut venir en contact avec la coulisse 17, son chant s'appuyant sur le fond du U et les lèvres 18 réalisant le guidage et l'étanchéité sur les bords de la vitre 16.

Selon la représentation de la figure 6, la raideur de la coulisse 17 est ponctuellement modifiée du fait de la présence d'un insert 19 en caoutchouc positionné entre une lèvre 18 et l'aile du U auquelle ladite lèvre 18 est rattachée. La forme de cet insert en caoutchouc 19 est telle que la mobilité de ladite lèvre 18 est réduite ce qui diminue le déplacement latéral de la vitre 16 au niveau de cet insert 19. De plus cet insert 19 présente une excroissance 20 qui se loge au fond de la coulisse et qui permet ainsi à l'insert de rester en place une fois positionné à l'endroit voulu à l'intérieur de la coulisse 17. Du fait de cette excroissance 20, le chant de la vitre coulissante 16 vient en appui sur cette partie de l'insert 19. Un tel insert 19 en caoutchouc peut facilement être mis en place une fois le joint coulisse 17 réalisé et monté sur l'habitacle du véhicule.

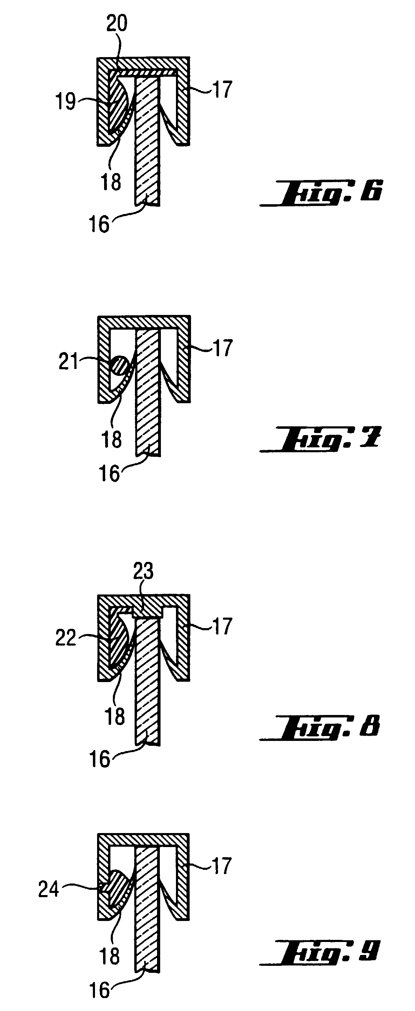

La représentation de la figure 7 se différencie de celle de la figure 6 précédente par le fait que l'insert en caoutchouc 21 est de forme beaucoup plus simple, celui-ci ne nécessitant pas la présente d'excroissance 20 car il est maintenu en place soit par un simple collage une fois la coulisse 17 réalisée et mise en forme, soit par extrusion lors de la réalisation de la coulisse 17 avant sa mise en forme. Ainsi, cet insert 21 est maintenu fixe entre une lèvre 18 et l'aile du U auquelle ladite lèvre 18 est rattachée. De cette manière, le déplacement latéral de la vitre 16 est ponctuellement diminué.

Selon la représentation de la figure 8, la raideur de la coulisse 17 est ponctuellement modifiée du fait de la présence d'un insert 22 en plastique positionné entre une lèvre 18 et l'aile du U auquelle ladite lèvre 18 est rattachée. De cette manière et comme précédemment, le déplacement de la vitre 16 est ponctuellement diminué, mais contrairement à l'insert 19 de la figure 6 qui lui est en caoutchouc, il est préférable que le chant de la vitre 16 ne repose pas sur une excroissance de l'insert 22 en plastique pour une question d'étanchéité au fond de la coulisse 17. En effet, le contact verre-plastique ne permet de réaliser une bonne étanchéité. Ainsi, au niveau du contact entre le chant de la vitre 16 et de la coulisse 17, une surépaisseur 23 est réalisée en caoutchouc, cette surépaisseur 23 permettant alors d'obtenir une bonne étanchéité au fond de la coulisse et par la même occasion permettant de réaliser le blocage de l'insert 22 en plastique une fois celui-ci mis en place à l'intérieur de la coulisse 17. Un tel insert 22 en plastique peut facilement être mis en place une fois la coulisse 17, comprenant la surépaisseur 23, réalisée et montée sur l'habitacle du véhicule.

Selon la représentation de la figure 9, la raideur de la coulisse 17 est ponctuellement modifiée par l'insertion d'un pion 24, indifféremment en caoutchouc ou en plastique, entre une lèvre 18 et l'aile du U auquelle ladite lèvre 18 est rattachée. Ce pion 24 est obtenu par injection de matière plastique ou caoutchouc à l'intérieur de la coulisse 17 une fois celle-ci surmoulée pour lui donner sa forme finale. Le point d'injection peut être réalisé, par exemple, soit lors du surmoulage de la coulisse 17, soit par perçage. Cette réalisation préférée est avantageusement facile à mettre en oeuvre sans qu'il ne soit nécessaire de former des inserts en caoutchouc ou en plastique ayant une forme particulière et adaptée à la taille de la coulisse. De plus, ce type de pion 24 reste bien en place dans la coulisse du fait de la matière durcie dans le point d'injection.

L'invention ne se limite pas ces types de réalisation, tous types de vitrage coulissant en contact avec un joint périphérique et dépourvu au moins du ou des modes de rayonnement qui sont couplés avec un ou plusieurs modes de cavité de l'habitacle du véhicule lorsque ledit vitrage est excité par un champ acoustique, rentrent dans le cadre de l'invention.

Les avantages présentés par le vitrage selon l'invention sont manifestes: la protection acoustique est sensiblement améliorée sans qu'il soit nécessaire de modifier la structure de toutes les surfaces vitrées du véhicule, donc en conséquence à moindre coût.

## Revendications

1. Vitrage coulissant de protection acoustique améliorée pour véhicule et notamment pour véhicule automobile, en contact avec un joint périphérique, **caractérisé en ce que** la liaison vitrage/habitacle du véhicule, au niveau du joint périphérique, est localement modifiée de sorte que ledit vitrage est dépourvu au moins du ou des modes de rayonnement qui sont couplés avec un ou plusieurs modes de rayonnement de l'habitacle du véhicule lorsque ledit vitrage est excité par un champ acoustique.

2. Vitrage coulissant de protection acoustique améliorée selon la revendication 1, **caractérisé en ce que** la liaison vitrage/habitacle du véhicule, au niveau du joint périphérique, est localement modifiée de sorte que ledit vitrage est dépourvu au moins du premier mode impair de rayonnement lorsque celui-ci est excité par un champ acoustique.

3. Vitrage coulissant de protection acoustique améliorée selon la revendication 1 ou 2, **caractérisé en ce que** la liaison vitrage/habitacle du véhicule, au niveau du joint périphérique, est localement modifiée de sorte que ledit vitrage est dépourvu de la totalité des modes impairs de rayonnement lorsque celui-ci est excité par un champ acoustique.

4. Vitrage coulissant de protection acoustique améliorée selon l'une des revendications 1 à 3, **caractérisé en ce que** le déplacement dudit vitrage dans le joint périphérique est localement diminué.

5. Vitrage coulissant de protection acoustique améliorée selon la revendication 4, **caractérisé en ce que** ledit vitrage possède au moins un point de voilage au niveau de son contact avec le joint périphérique.

6. Vitrage coulissant de protection acoustique améliorée selon la revendication 4, **caractérisé en ce que** ledit vitrage présente au moins une surépaisseur au niveau de son contact avec le joint périphérique.

7. Vitrage coulissant de protection acoustique améliorée selon la revendication 4, **caractérisé en ce que** le joint périphérique possède au moins un clip ou crochet venant au contact du vitrage.

8. Vitrage coulissant de protection acoustique améliorée selon la revendication 4, **caractérisé en ce que** le joint périphérique est contraint sur au moins une partie de sa longueur.

9. Vitrage coulissant de protection acoustique améliorée selon l'une des revendications précédentes, **caractérisé en ce que** ledit vitrage est en contact avec un joint coulisse et un joint lécheur.

10. Vitrage coulissant de protection acoustique améliorée selon la revendication 9, **caractérisé en ce que** la liaison entre le vitrage et le joint coulisse présente une raideur différenciée.

11. Joint périphérique destiné à recevoir un vitrage mobile de protection acoustique améliorée pour véhicule et notamment pour véhicule automobile, **caractérisé en ce que** ledit joint diminue localement le déplacement du vitrage.

12. Joint périphérique selon la revendication 11, **caractérisé en ce que** ledit joint présente une raideur différenciée.

13. Joint périphérique selon la revendication 11, **caractérisé en ce que** un clip ou crochet est fixé sur ledit joint et est en contact avec le vitrage mobile.
